# EUROPEAN PATENT APPLICATION

(11) **EP 2 484 880 A1**
(43) Date of publication of application: **08.08.2012**
(21) Application number: 11153388.1
(22) Date of filing: 04.02.2011
(51) Int. Cl.: F02C 3/24, F02C 7/22, F02C 7/264

(54) **Liquid fuel assist ignition system of a gas turbine and method to provide a fuel/air mixture to a gas turbine**

(71) Applicant: Siemens Aktiengesellschaft, 80333 München (DE)
(72) Inventor: Liu, Kexin, Lincoln, LN4 2QF (GB)

(57) **Abstract**

Liquid fuel assist ignition system (1) for providing a fuel-air mixture to a gas turbine in its start-up phase, comprising a high pressure tank (2), a vacuum pump (3) connected to the high pressure tank (2), a liquid fuel inlet (4) connected to the high pressure tank (2), an air inlet (5) connected to the high pressure tank (2) and an outlet (6) connected to a burner of the gas turbine (20); and method to provide a fuel/air mixture to a gas turbine (20) in its start-up phase using a liquid fuel assist ignition system (1).

## Description

The present invention relates to a liquid fuel assist ignition system for providing a fuel/air mixture to a gas turbine in its start-up phase. The invention relates further to a method to provide a fuel/air mixture to a gas turbine in its start-up phase using a liquid fuel assist ignition system.

Gas turbines operating with liquid fuels have common issues related to the engine start-up and the run-up to full load. This is a result of poor fuel atomisation, vaporisation at un-desirable conditions during the ignition. Sometimes it is also reflected in the design compromises made such as location of the ignitor or the fuel nozzle, particular for dual fuel combustors i.e. combustors operating on both gaseous and liquid fuel.

It is therefore an object of the invention to enhance the reliability of a gas turbine performance related to the engine start-up and run up. In particular a system is needed to enhance the performance of the engine start-up and run-up of a gas turbine.

The objective of the invention is solved by a liquid fuel assist ignition system with the features according to claim 1 and by a method to provide a fuel/air mixture to a gas turbine in its start-up phase using a liquid fuel assist ignition system with the features according to claim 13. Advantages, features, details, aspects and effects of the invention arise from the depended claims, the description and the figures. Features and details which are described in connection with the liquid fuel assist ignition system count as well for the method to provide a fuel/air mixture to a gas turbine in its start-up phase using a liquid fuel assist ignition system, and vice versa.

According to a first aspect of the present invention the problem is solved by a liquid fuel assist ignition system for providing a fuel/air mixture to a gas turbine in its start-up phase, comprising a high pressure tank, a vacuum pump connected to the high pressure tank, a liquid fuel inlet connected to the high pressure tank, an air inlet connected to the high pressure tank and an outlet connected to a burner of the gas turbine.

Such a liquid fuel assist ignition system enables to enhance the performance of the engine start-up and run-up of a gas turbine. The liquid fuel assist ignition system enables to prepare the fuel/air mixture for the burner of a gas turbine in such a way that the burner can operate more effective in the start-up phase and run-up phase. In particular, the liquid fuel assist ignition system enables a good pre-mixing of fuel and air. The increased mixing of the fuel/air mixture enables a better start-up and run-up of the burner of the gas turbine. Because of the vacuum in the high pressure tank the injected fuel is atomized very well.

The liquid fuel assist ignition system comprises a high pressure tank. In this high pressure tank fuel and air are injected. A vacuum pump is connected to the high pressure tank to vacuum the tank to a certain pressure, in particular a negative pressure. That means, the vacuum pump enables to depressurize the pressure in the high pressure tank. In particular, the vacuum pump enables to place inside the high pressure tank a negative pressure. After switching of the vacuum pump and obtaining a negative pressure inside the high pressure tank liquid fuel is injected into the high pressure tank by a liquid fuel inlet which is connected to the high pressure tank. Because of the sub-pressurized high pressure tank the liquid fuel which enters the tank is immediately atomized. Further, an air inlet is connected to the high pressure tank for injecting air into the high pressure tank. That means, after the injection of fuel into the high pressure tank air can be pumped into the high pressure tank. Once the pressure inside the high pressure tank has achieved its target pressure the air injection is stopped. The ratio of fuel and air inside the high pressure tank is ideally controlled close to its stoichiometric value. The control of fuel and air ratio partial pressures is according to its partial pressure at its stoichiometric condition. Once the fuel/air mixture is mixed inside the high pressure tank the pre-mixed fuel/air mixture can be passed on through the outlet which is connected to the burner of the gas turbine to enter the burner of the gas turbine to assist the ignition and the start-up phase of the burner. That means, when the pre-mixed fuel/air mixture enters the gas turbine burner the gas turbine engine is been started. The pre-mixed fuel/air mixture can enter the burner through its gas pilot path or a new path designed similarly to the gas pilot path off the burner.

The liquid fuel assist ignition system pre-mixes the fuel/air mixture for the burner of the gas turbine. Because of that the burner can start directly with a high efficiency.

According to a preferred development of the invention the vacuum pump and/or the liquid fuel inlet and/or the air inlet and/or the outlet can comprise one or more control elements, in particular switchable valves. Advantageously the connection between the vacuum pump and the high pressure tank, the liquid fuel inlet, the air inlet and the outlet each comprise at least one control element, like a switchable valve, a cock stop, a gate valve, etc.. A control element, like a switchable valve, in the pipeline between the vacuum pump and the high pressure tank enables to stabilize the pressure condition inside the high pressure tank. A control element in the fuel inlet and pipeline, respectively, or in the air inlet and pipeline, respectively, enables to regulate and stop the fuel injection or air injection to the high pressure tank. The control element in the outlet, that means in the pipeline between the high pressure tank and the gas turbine, is closed during the mixing of the fuel/air mixture inside the high pressure tank and can be opened for passing on the pre-mixed fuel/air mixture to the burner of the gas turbine. The control elements allow controlling the injection of fuel and air into the high pressure tank, establishing a vacuum inside the high pressure tank and transferring of the fuel/air mixture to the downstream burning process.

To enable a good injection of liquid fuel into the high pressure tank the liquid fuel inlet can comprise a needle like pipe, nozzles or the like. The needle like pipe works like a nozzle and enables a fine atomization of the injected fuel.

According to a preferred development of the invention the liquid fuel assist ignition system can further comprise an external heat source to heat up the high pressure tank. The external heat source can be an electric heater, but is not limited thereto. The external heat source is advantageously attached to the external surface of the high pressure tank. The external heat source enables to heat up the high pressure tank to a certain temperature. Because of the high temperature inside the high pressure tank the injected liquid fuel vaporizes immediately when entering the high pressure tank. This ensures vaporization and a very good distribution of the injected liquid fuel inside the high pressure tank. The external heat source can comprise pipes arranged at the external side of the high pressure tank to heat up the wall of the high pressure tank. The external heat source can be controlled by a temperature controller, for example a PID-type temperature controller, and by a thermocouple to provide heat for the high pressure tank to maintain a certain high temperature, which is normally a few degrees higher than the liquid fuel boiling temperature. If diesel is used as liquid fuel the boiling temperature is about 360° C.

The liquid fuel assist ignition system enables to prepare the fuel/air mixture for the burner of a gas turbine in such a way that the burner can operate more effective in the start-up phase and run-up phase. In particular, the liquid fuel assist ignition system enables a good pre-mixing and prevaporization of fuel and air. The increased mixing of the fuel/air mixture enables a better start-up and run-up of the burner of the gas turbine. Because of the heat and the vacuum inside the high pressure tank the injected fuel is vaporized and atomized immediately. Such a liquid fuel assist ignition system enables to enhance the performance of the engine start-up and run-up of a gas turbine.

According to another very preferred embodiment of the liquid fuel assist ignition system a fan is provided inside the high pressure tank. That means, inside the high pressure tank there is a fan arranged which can be driven by motor and be controlled by a control system of the liquid fuel assist ignition system. The fan enables to enhance the mixing of the injected liquid fuel and liquid fuel vapour, respectively, and the injected air. In particular, the fan is arranged in a middle part of the high pressure tank. Advantageously the fan is turned on before injecting the liquid fuel into the high pressure tank. That enables an uniform distribution of the injected liquid fuel and therefore a uniform vaporization of the liquid fuel. During the injection of the air into the high pressure tank the fan enables a good mixing of the air and the liquid fuel vapour.

The liquid fuel assist ignition system according to the present invention can furthermore comprise a control system for monitoring and/or controlling the liquid fuel assist ignition system. In particular, the control system of the liquid fuel assist ignition system can control the pressure in the liquid fuel inlet, in the air inlet, in the high pressure tank and/or in the outlet. Furthermore, the control system can control the temperatures in all inlet pipelines and outlet pipelines of the high pressure tank. The high pressure tank is connected to a vacuum pump, an air supply pump and a fuel supply pump. These pumps can control in cooperation with the control system the supply of fuel and air, respectively, into the high pressure tank and can control the pressure inside the high pressure tank. The fan arranged inside the high pressure tank can be controlled by the control system, as well. The control system enables that a certain amount of liquid fuel and a certain amount of air enters the high pressure tank. The control system further controls and regulates the temperature inside the high pressure tank by controlling the external heat source arranged at the external wall of the high pressure tank.

The liquid fuel assist ignition system can further comprise a static pressure transducer. This static pressure transducer can be used to control the partial pressure in the high pressure tank and can be used to control the fuel/air ratio by controlling the partial pressure of the fuel/air mixture. That means the amount of fuel allowed to enter the high pressure tank can be controlled by the static pressure transducer which is controlled by the control system of the liquid fuel assist ignition system. The amount of fuel allowed to enter the high pressure tank can be controlled by the static pressure transducer by reading the partial pressure of the fuel vapour inside the high pressure tank. The control system controls advantageously all control elements of the liquid fuel assist ignition system. That means, for example, after the high pressure tank is heated up to a certain temperature the control system can open the control element between the high pressure tank and the vacuum pump to vacuum the high pressure tank to a certain pressure. After reaching a certain pressure inside the high pressure tank the control system switches off the vacuum pump and closes the control element arranged between the vacuum pump and the high pressure tank. After switching off of the vacuum pump and closing the vacuum pump valve the control system can open the fuel pump to allow the liquid fuel to enter the high pressure tank through the liquid fuel inlet, in particular through the needle-like pipe which has a very small internal diameter. Because the high pressure tank is hot and sub-pressurized, once the liquid fuel enters into the high pressure tank it immediately vaporizes. The amount of liquid fuel allowed to enter the high pressure tank is controlled by the static pressure transducer of the control system by reading the partial pressure of the fuel vapour inside the high pressure tank. After a certain amount of fuel has entered the high pressure tank the control system closes the fuel pump and the corresponding control element in the liquid fuel inlet and opens the air pump to allow air to enter the high pressure tank through the air inlet. Once the pressure inside the high pressure tank has achieved its target pressure, the air pump and air control element, respectively, are switched off. The ratio of fuel and air is ideally controlled close to its stoichiometric value. The control of fuel and air ratio partial pressures is according to its partial pressure at its stoichiometric condition. Once the fuel/air mixture is prepared the control system opens the control element, in particular a valve, arranged in the outlet of the high pressure tank to allow the pre-mixed and pre-vaporized fuel/air mixture to enter the gas turbine burner to assist the ignition and start-up phase of the burner. The flow of the fuel and the air into the high pressure tank and the passing on of the pre-mixed and pre-vaporized fuel/air mixture to the gas turbine burner are controlled by the control system of the liquid fuel assist ignition system.

To support the liquid fuel assist ignition system and in particular the control system of the liquid fuel assist ignition system means for measuring the temperature and/or the pressure and/or the fuel-air ratio are provided and connected to the control system. This means, which can be for example thermocouple elements, temperature controller or pressure transducer reading elements, assist the control system to operate the liquid fuel assist ignition system as desired.

According to another preferred development of the invention the liquid fuel assist ignition system is characterized in that a liquid fuel collector for collecting residual fuel is connected to the high pressure tank. This liquid fuel collector enables to collect the remaining amount of fuel inside the high pressure tank after passing on the fuel/air mixture through the outlet to the gas turbine burner. Therefore the liquid fuel assist ignition system according to the present invention can furthermore comprise a control element in the connection between the high pressure tank and the liquid fuel collector. This control element can be a switchable valve, but is not limited thereto. After the control element, in particular the switchable valve, inside the outlet pipeline and after the ignition is initiated the pressure inside the high pressure tank is gradually reduced. Once the pressure inside the high pressure tank is close to atmospheric pressure the control element in the outlet and in the outlet pipeline, respectively, is closed by the control system of the liquid fuel assist ignition system. After that the control system can switch the air pump in the air inlet on to allow air entering to the high pressure tank to dilute the residual fuel/air mixture. The control system can further switch on the vacuum pump to disposal the residual fuel/air mixture. The control system advantageously repeats the previous two steps several times. After that the control system advantageously switches off the fan, the external heat source and all pumps of the liquid fuel assist ignition system. The control element in the pipeline between the high pressure tank and the liquid fuel connector is opened by the control system to allow the residual liquid to be collected by the liquid fuel collector. After the residual liquid or mixture is removed from the high pressure tank the control element, which is in particular a valve, in the pipeline to the liquid fuel collector is closed by the control system.

According to a further preferred embodiment of the liquid fuel assist ignition system the high pressure tank can be surrounded by an additional tank, whereby the space between the high pressure tank and the additional tank is filled with inert gas. This inert gas can be for example N₂ or CO₂. This bigger additional tank encloses the high pressure tank to operate the liquid fuel assist ignition system in extreme safety environments.

According to the second aspect of the invention the problem is solved by a method to provide a fuel/air mixture to a gas turbine in its start-up phase using a liquid fuel assist ignition system according to the first aspect of the invention. The method is characterized by the following steps:
a) Switching on the vacuum pump,
b) Decreasing the pressure in the high pressure tank, especially down to 0.2 - 0.1 bar,
c) Switching off of the vacuum pump,
d) Injecting fuel into the high pressure tank and thereby atomizing the fuel in the high pressure tank,
e) Stopping the fuel injection and switching on the air pump and
f) Injecting air in the high pressure tank,
g) Switching off of the air pump and
h) Passing on the air/fuel mixture from the high pressure tank to a burner of the gas turbine.

Such a method enables to enhance the reliability of the burner performance related to the burner start-up and run-up phase.

According to a preferred development of the invention the before described method can further be characterized in that that before the injection of the fuel into the high pressure tank the fan is turned on. The fan enables a uniform mixing of the fuel and the fuel/air mixture, respectively, inside the high pressure tank.

Before the injection of the fuel to the high pressure tank the high pressure tank is advantageously heated up by the external heat source. A heated up and sub-pressurized high pressure tank enables that once the liquid fuel enters the high pressure tank the liquid fuel immediately vaporizes.

The foregoing and other features and advantages of the present invention will become more apparent in the light of the following description and the accompanying drawings, where:
- Fig. 1: shows schematically an embodiment of a liquid fuel assist ignition system according to the invention,
- Fig. 2: shows schematically the high pressure tank of the liquid fuel assist ignition system according to fig. 1 and the connections from and to the high pressure tank,
- Fig. 3: shows schematically a high pressure tank of another liquid fuel assist ignition system, whereby the high pressure tank is surrounded by an additional tank.

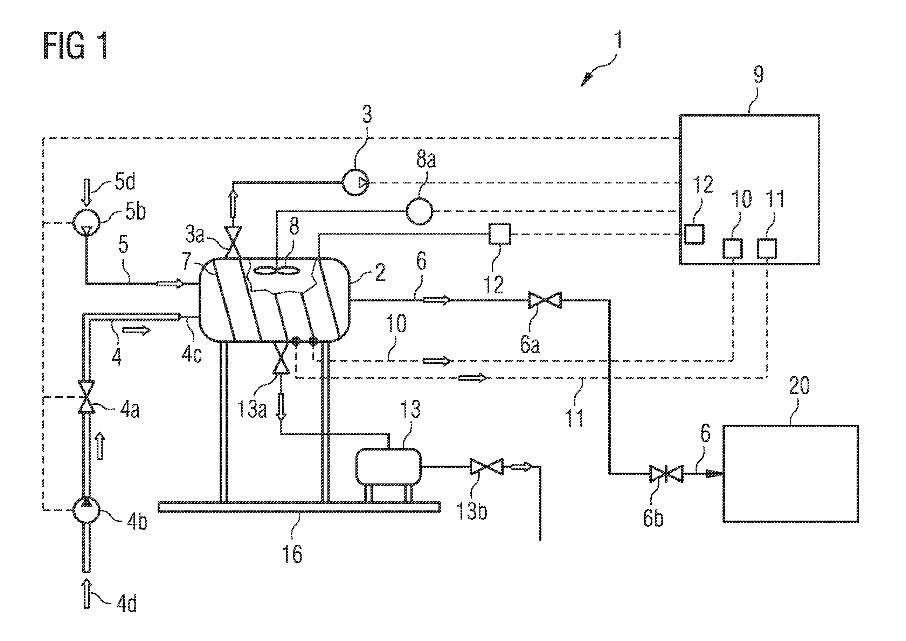

Elements with the same function and mode of operation are provided in the fig. 1-3 with the same references.

Fig. 1 shows schematically a first possible embodiment of the liquid fuel assist ignition system 1 for providing a fuel/air mixture to a gas turbine 20 in its start-up phase. The liquid fuel assist ignition system 1 comprises a high pressure tank 2. Inside the high pressure tank 2 a fan 8 is arranged, whereby the fan 8 is driven by a motor 8a which is controlled by the control systems 9 of the liquid fuel assist ignition system 1. Further, a vacuum pump 3 is connected to the high pressure tank 2. The vacuum pump 3 enables to establish a certain pressure inside the high pressure tank 2. In particular the vacuum pump 3 enables to establish a negative pressure inside the high pressure tank 2. A liquid fuel inlet 4 and an air inlet 5 are connected to the high pressure tank 2, as well. The liquid fuel inlet 4 comprises an inlet pipeline whereby a fuel pump 4b and a control element 4a in form of a valve is arranged in the pipeline of the liquid fuel inlet 4. The air inlet 5 is connected via a pipeline to the high pressure tank 2 to inject air 5d into the high pressure tank 2. Further the high pressure tank 2 has an outlet 6 which is connected to a burner of a gas turbine 20.

The outlet 6 comprises a pipeline with two control elements 6a, 6b. Both control elements 6a, 6b are advantageously switchable valves. The first control element 6a which is arranged near to the high pressure tank 2 controls the passing on of the fuel/air mixture from the inside of the high pressure tank 2 to the burner of the gas turbine 20. The second control element 6b is advantageously a flash back resistant valve which is arranged next to the burner of the gas turbine 20. The liquid fuel assist ignition system 1 further comprises a liquid fuel collector 13 to allow residual liquid to be collected. Therefore a further control element 13a, which is in particular a switching valve, is arranged in the pipeline between the high pressure tank 2 and the liquid fuel collector 13. Downstream of the liquid fuel collector 13 a further control element 13b is arranged in a pipeline which enables the return of the collected liquid from the liquid fuel collector 13 to a fuel reservoir or a fuel disposal. The control element 13b controls the flow of the residual liquid. The high pressure tank 2 is based on a base plate 16. The liquid fuel collector 13 is based at the base plate 16, as well. The liquid fuel assist ignition system 1 comprises a control system 9 which controls the whole liquid fuel assist ignition system 1. That means, the control system 9 monitors, measures and controls inlets 4, 5 and outlets 6 to the high pressure tank 2, especially measures and controls the amount of fuel 4d and air 5d entering the high pressure tank 2. Further the control system 9 controls the motor 8a of the fan 8, controls all pumps 3, 4b, 5b of the liquid fuel assist ignition system 1. The control system 9 comprises means, like temperature controller 12, thermocouples 10 and pressure transducer 11 for controlling the temperature and the pressure inside the high pressure tank 2.

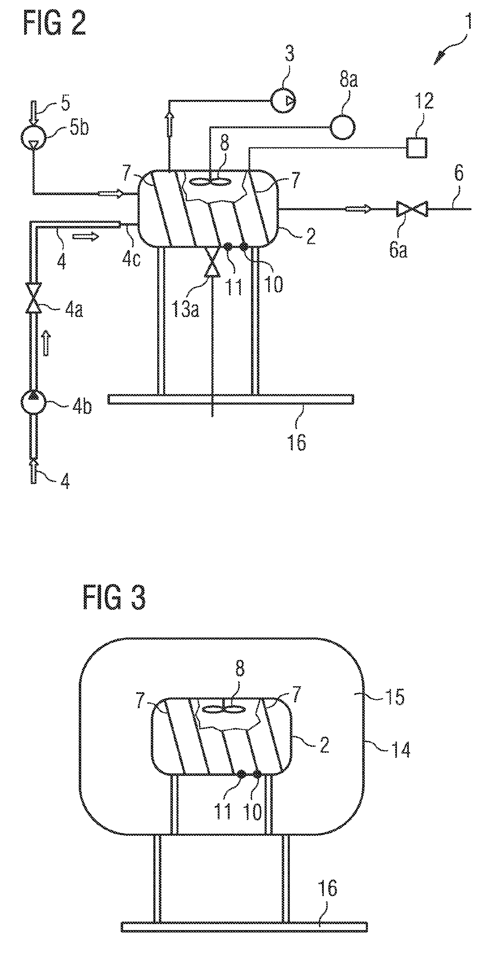

Fig. 2 shows the high pressure tank 2 of the liquid fuel assist ignition system 1 according to fig. 1. The high pressure tank 2 has an external heat source 7 attached to its external surface. The external heat source 7 is controlled by the control system 9, especially by a PID type temperature controller 10 and a thermocouple 11 of the control system 9, to provide heat for the high pressure tank 2 to maintain the high pressure tank 2 at a certain high temperature, which is normally a few degrees higher than the liquid fuel boilng temperature of the liquid fuel 4d injected into the high pressure tank 2.

Fig. 3 shows schematically a high pressure tank 2 of another liquid fuel assist ignition system 1. The high pressure tank 2 is surrounded by an additional tank 14 and the space between the high pressure tank 2 and the additional tank 14 is filled with inert gas 15, especially with N₂ or CO₂. Such a covered high pressure tank 2 is advantageously in extreme safety environments.

## Claims

1. Liquid fuel assist ignition system (1) for providing a fuel/air mixture to a gas turbine (20) in its start-up phase, comprising
a) a high pressure tank (2),
b) a vacuum pump (3) connected to the high pressure tank (2),
c) a liquid fuel inlet (4) connected to the high pressure tank (2),
d) an air inlet (5) connected to the high pressure tank (2) and
e) an outlet (6) connected to a burner of the gas turbine (20).

2. Liquid fuel assist ignition system (1) according to claim 1, **characterized in that** the vacuum pump (3) and/or the liquid fuel inlet (4) and/or the air inlet (5) and/or the outlet (6) comprises one or more control elements (3a, 4a, 6a), in particular switchable valves.

3. Liquid fuel assist ignition system (1) according to claim 1 or 2, **characterized in that** the liquid fuel inlet (4) comprises a needle like pipe (4c).

4. Liquid fuel assist ignition system (1) according to at least one of the claims claim 1 to 3, **characterized in that** the liquid fuel assist ignition system (1) comprises an external heat source (7) to heat up the high pressure tank (2).

5. Liquid fuel assist ignition system (1) according to claim 4, **characterized in that** the external heat source (7) is an electric heater.

6. Liquid fuel assist ignition system (1) according to at least one of the claims 1 to 5, **characterized in that** a fan (8) is provided inside the high pressure tank (2).

7. Liquid fuel assist ignition system (1) according to at least one of the claims 1 to 6, **characterized in that** a control system (9) is provided for monitoring and/or controlling the liquid fuel assist ignition system (1).

8. Liquid fuel assist ignition system (1) according to claim 7, **characterized in that** means (10, 11, 12) for measuring the temperature and/or the pressure and/or the fuel-to-air ratio are provided and connected to the control system (9).

9. Liquid fuel assist ignition system (1) according to at least one of the claims 1 to 8, **characterized in that** a liquid fuel collector (13) for collecting residual fuel is connected to the high pressure tank (2).

10. Liquid fuel assist ignition system (1) according to claim 9, **characterized in that** the connection to the liquid fuel collector (13) comprises a control element (13a), in particular a switchable valve.

11. Liquid fuel assist ignition system (1) according to at least one of the claims 1 to 10, **characterized in that** the high pressure tank (2) is surrounded by an additional tank (14) and that the space between the high pressure tank (2) and the additional tank (14) is filled with inert gas (15).

12. Liquid fuel assist ignition system (1) according to claim 11, **characterized in that** the inert gas (15) is N₂ or CO₂.

13. Method to provide a fuel/air mixture to a gas turbine (20) in its start-up phase using a liquid fuel assist ignition system (1) according to at least one of the claims 1 to 12, comprising the following steps:
f) Switching on the vacuum pump (3),
g) Decreasing the pressure in the high pressure tank (2), especially down to 0.2-0.1 bar,
h) Switching off of the vacuum pump (3),
i) Injecting fuel into the high pressure tank (2) and thereby atomizing the fuel in the high pressure tank (2),
j) Stopping the fuel injection and switching on the air pump (5b) and
k) injecting air in the high pressure tank (2),
l) Switching off of the air pump (5b),
m) Passing on the air/fuel mixture from the high pressure tank (2) to a burner of the gas turbine (20).

14. Method to provide a fuel/air mixture to a gas turbine (20) in its start-up phase according to claim 13, **characterized in that** before the injection of the fuel into the high pressure tank (2) the fan (8) is turned on.

15. Method to provide a fuel/air mixture to a gas turbine in its start-up phase according to claim 13 or 14, **characterized in that** before the injection of the fuel into the high pressure tank (2) the high pressure tank (2) is heated up by an external heat source (7).
